# EUROPEAN PATENT APPLICATION

(11) **EP 1 222 961 A2**
(43) Date of publication of application: **17.07.2002**
(21) Application number: 01810025.5
(22) Date of filing: 10.01.2001
(51) Int. Cl.: B01J 37/02, B01J 20/18, C01B 39/02, B01J 29/06, B01J 19/08

(54) **Method of forming a zeolite layer on a substrate**

(71) Applicant: ABB RESEARCH LTD., 8050 Zürich (CH)
(72) Inventor: Kraus, Martin, 5415 Nussbaumen (CH); Zhang, Kui, Tianjin 30072, P.R. (CN); Kogelschatz, Ulrich, 5212 Hausen (CH); Eliasson, Baldur, 5413 Birmensdorf (CH); Wokaun, Alexander, 5232 Villigen (CH)
(74) Representative: ABB Patent Attorneys

(57) **Abstract**

A method of crystallizing a layer of zeolite or zeolite-like material on the surface of a ceramic foam or a metal foam; the method comprising the steps of a) providing a composition capable of forming the zeolite or the zeolite-like material; b) coating at least a part of the composition on said surface of the ceramic foam or the metal foam; c) heating the ceramic foam or the metal foam with the composition coated thereon within a reaction vessel; d) controlling the coating and the heating to crystallize the layer of zeolite or zeolite-like material on the surface of the ceramic foam or the metal foam.

## Description

### Technological Background of the Invention and Prior Art

The present invention relates to a method of crystallizing a layer of zeolite or zeolite-like material on the surface of a ceramic foam or a metal foam. Furthermore the present invention relates to a ceramic foam or a metal foam comprising a layer of zeolite, zeolite-like material or modified zeolite obtainable by said method, to a use of those ceramic or metal foams as normally solid catalyst or as adsorbent, and, furthermore, to a use of those ceramic or metal foams as normally solid catalyst or catalyst support in dielectric barrier discharge reactions, and to a catalytic dielectric barrier discharge reactor comprising a ceramic foam with a layer of zeolite, zeolite-like material or modified zeolite.

Reticulated structures made of a ceramic or metallic material such as open-pore ceramic and metal foams have recently attracted a great deal of interest. After the first use for filtration of molten metals those foams have been employed inter alia as particulate filters, in low emissions burners and flow distributors. Ceramic and metal foams show good high temperature resistance and have low bulk density with an open porosity as high as 80% to 90% formed from megapores being 0.04 to 1.5 mm in diameter. Characteristic parameters include cell size and surface area, all correlated with the number of pores per inch (abbreviated as ppi).

Metal foams can be manufactured for example by leaching out one component out of a metal alloy. Three-dimensional reticulated ceramic foams are typically prepared by applying a ceramic slurry to a substrate in the form of a synthetic resin foam, such as a polyurethane foam, which has the same porosity as the desired final product, followed by drying and firing the coated substrate, i.e. burning away the organic precursor and sintering the ceramic. Examples thereto are described in the EP 586 102 and in the EP 726 234.

The use of ceramic or metal foams as catalysts and/or catalyst supports in heterogeneously catalyzed reactions have also already been disclosed. Thus, in the US 5'336'656 reticulated ceramic or metal foams coated with cobalt compounds, noble metals or mixtures thereof are described as superior catalysts for the oxidation of ammonia to produce nitric oxide. Moreover, catalysts for reforming hydrocarbon feedstocks are provided in the US 4'863'712 wherein the catalyst comprise a ceramic foam and nickel and/or cobalt as the active material.

Typical advantages of these open megaporous structures follow, as indicated, from their large interconnected pores, their high porosity and their tortuous nature. Thus, megaporosity provides a tortuous path for internal gas flow wherein turbulence is much enhanced resulting in a better contact of the fluid medium with the catalyst surface, and, thus, in a lower risk of film diffusion limitation. Moreover, it has been shown that radial flow is much higher in foams than in equivalent beds of particles resulting in forced convective flow within the structure, a feature known to produce better performance than conventional pellets that allow only diffusional transport through smaller sized pores. Thus, a high surface-to-volume ratio results in a lower risk of pore diffusion limitation.

Furthermore, high porosity also provides much lower pressure drop. This is especially the case if precipitations, such as coke, are formed in the course of the heterogeneous catalysis on the surface of the foam and/or on its active catalytic phase since this results typically in a fast blocking of the cavities of normal catalyst supports. A further major advantage of the ceramic or metal foams as compared to other catalyst supports is the better thermal conductivity due to its continuous web-like structure thereby providing improved heat transfer into and throughout the foam. On the contrary, poor thermal contact and heat transfer exist, e.g. between the pellets of a catalyst pellet bed, in particular in the case of metal pellets. Typically, the specific surface of most ceramic foam catalyst supports is below 1 m²/g which is generally too low for practical purposes. Therefore, a washcoat is added to increase the specific surface area and, thus, to provide additional surface for an optional catalyst to attach to. The amount of washcoat that can be successfully applied is particularly limited by the thickness that will adhere without cracking of the coating and by the spacing of the channels or pores in the ceramic foam. The uniformity of the washcoat is essential since it will determine the uniformity of the actual catalyst and, as a consequence, its catalytic efficiency.

Zeolites are used in myriad catalytic applications such as catalytic cracking or thermo-forming operations and other particularly heterogeneously catalyzed chemical processes conducted by the petroleum industry. In these applications, the zeolite-based catalysts are applied in various forms. Many catalytic operations employ a bed of particulate catalyst through which the reaction stream passes. To this purpose zeolites have been crystallized directly into powdery or micro-pellet form, or pre-formed zeolites have been embedded in or coated on porous ceramic pellets or beads. Such pelletized catalysts, however, although presenting higher catalytic surface area to the reaction stream, provide high resistance to flow that results in substantial pressure drop, as already indicated above. Moreover, preformed zeolites that are coated onto a ceramic substrate by wash-coating procedures suffer from several disadvantages, as already indicated above. Furthermore, through operating conditions of the specific catalysis flaking off or abrading of the zeolite coating from the underlying ceramic support can occur decreasing the catalytic efficiency and ultimately requiring the re-coating or complete replacement of the catalytic substrate.

In the JP 3'123'641, now, the formation of a zeolite layer on a porous carrier having a small air permeation resistance such as a ceramic foam is described wherein the zeolite is synthetically deposited directly thereon. To this purpose a ceramic foam is immersed into an aqueous solution of sodium hydroxide having a chemical composition 0.30 TPA : 0.20 Na : (1/R) Al : 1 Si : 7.5 H₂O, wherein R is Si/Al having an atomic ratio of 40-950 and TPA represents tetraalkyl ammonium, followed by crystallization at a temperature of 100-200°C and then baking in an air stream at a temperature of 500-600°C. After ion-exchange of sodium ions in a zeolite layer formed on the ceramic foam with ammonium ions, it is dried and then baked at a temperature of 500-600°C.

It has been experienced, though, that applying the afore-mentioned described method no uniform layer of zeolite is formed and an irregular coverage of zeolites on the foam is observed. Furthermore, blocking and plugging of the pores of the metal or ceramic foam typically occur which leads to an undesired substantial pressure drop. Moreover, substantial amounts of zeolites or other species are formed at the bottom and at the internal walls of the reaction vessel decreasing the coating efficiency, i.e. the amount of formed zeolite on the foam related to the amount of composition initially present in the reaction vessel.

### Objects of the Invention

It is therefore a main object of the present invention to avoid the disadvantages and limitations of prior art methods and apparatus means.

Moreover, it is an object of the present invention to provide for a method of crystallizing a layer of zeolite or zeolite-like material on the surface of a ceramic foam or a metal foam, which method allows to increase the coating efficiency and, thus, to save resources and costs. It is therefore an object of the present invention to provide for a method of crystallizing a zeolite or zeolite-like material layer on a ceramic or metal foam which method can be carried out in an economic manner.

Furthermore, it is an object of the present invention to provide for a method of crystallizing a layer of zeolite or zeolite-like material on the surface of a ceramic foam or a metal foam, which method allows to form a regular and uniform coverage of the zeolite or zeolite-like material on a ceramic foam or a metal foam.

It is a further object of the present invention to provide for a method of crystallizing a layer of zeolite or zeolite-like material on the surface of a ceramic foam or a metal foam, which method allows to form a layer of a zeolite or zeolite-like material on a ceramic or a metal foam without blocking or plugging the pores of the foams.

It is still a further object of the present invention to provide for a ceramic or a metal foam having a high surface area without the need of applying wash coat procedures and still having a open-porosity of about 80%-90%.

Further objects and advantages of the present invention will become apparent as this specification proceeds.

### Brief Summary of the Invention

We have found that the objects can be achieved according to a first general embodiment of the invention by a method as set forth in claim 1. Accordingly, the invention provides for a method of crystallizing a layer of zeolite or zeolite-like material on the surface of a ceramic foam or a metal foam; said method comprising the steps of a) providing a composition capable of forming said zeolite or said zeolite-like material; b) coating at least a part of said composition on said surface of said ceramic foam or said metal foam; c) heating said ceramic foam or said metal foam with said composition coated thereon within a reaction vessel; d) controlling said coating and said heating to crystallize said layer of zeolite or zeolite-like material on said surface of said ceramic foam or said metal foam.

Moreover, in a second general embodiment the present invention provides for a ceramic or a metal foam comprising a layer of zeolite, zeolite-like material or modified zeolite, wherein said zeolite, zeolite-like material or modified zeolite is crystallized on the surface of said ceramic foam or said metal foam, and wherein said ceramic foam or said metal foam is obtainable by a method in accordance with the first general embodiment of this invention.

In a third general embodiment the present invention provides for a use of a ceramic or a metal foam comprising a layer of zeolite, zeolite-like material or modified zeolite as a normally solid catalyst, wherein said zeolite, zeolite-like material or modified zeolite is crystallized on the surface of said ceramic foam. The preferred catalytic reactions in which the inventive foams are preferably used are petroleum refining processes, such as fluid catalytic cracking, as well as petrochemical transformations and hydrocarbon reforming processes, such methanol to gasoline (MTG) process and the Fischer-Tropsch (FT) process for the synthesis of liquid fuels. Further very preferred catalytic applications of the inventive foams will become apparent as this description continues.

In a fourth general embodiment the present invention provides for a use of a ceramic or a metal foam comprising a layer of zeolite, zeolite-like material or modified zeolite as a normally solid catalyst or a catalyst support in dielectric barrier discharge reactions, wherein said zeolite, zeolite-like material or modified zeolite is crystallized on the surface of said ceramic foam.

In a fifth general embodiment the present invention provides for a dielectric barrier discharge reactor for catalytic conversion of a fluid material comprising a first electrode means, a second electrode means, a normally solid dielectric material positioned between said first and said second electrode means, a ceramic foam positioned between said first and said second electrode means, and a normally solid catalyst being a member selected from the group consisting of zeolites, modified zeolites and zeolite-like materials, wherein said normally solid catalyst is crystallized on the surface of said ceramic foam.

### Definitions and Detailed Description of the Invention and of Preferred Embodiments thereof

The term "about" as used herein before any numeral implies a variation of typically ± 10%.

The term "normal" with regard to boiling points, boiling ranges and the like indicates that these values are understood as being corrected for "normal conditions", i.e. a temperature of 25°C and an atmospheric pressure of 1013 mbar. In analogy, the term "normal" with respect to physical states of matter and the like indicates that they are referred to said "normal conditions". The term "fluid material" as used herein indicates the state of matter of said material and normally gaseous and normally liquid materials are encompassed within this expression.

The inventive method allows to crystallize a layer of zeolite or zeolite-like material on the surface of a ceramic or a metal foam in a very economic manner since-no starting composition is wasted. Thus, in general the whole amount of composition, which is capable of forming the zeolite or the zeolite-like material and which has been coated on the surface of the ceramic foam or metal foam in a prior step, is substantially converted into a layer of zeolite or zeolite-like material being strongly bonded to the surface of the foam. Therefore, the inventive method increases the coating efficiency up to a value of 1, wherein the coating efficiency, as used herein, corresponds to the amount of formed zeolite or zeolite-like material on the surface of the ceramic or metal foam related to the amount of composition initially present in the reaction vessel. Typically, no substantial amounts of zeolites or other species are observed at the bottom or at the internal walls of the reaction vessel after having conducted the inventive method.

Moreover, the composition capable of forming the zeolite or the zeolite-like material is typically provided in a separate beaker or pot. As a consequence, a possible remainder of the prepared composition after conducting a first coating, can be used for a further coating, either for a further ceramic or metal foam or, as will be explained later on, for subsequent coatings of the same and already coated ceramic or metal foam.

Typically, the surface of the ceramic or metal foam is coated with the composition capable of forming the zeolite or the zeolite-like material in such a manner that a thin and adherent coating is formed without blocking or plugging the pores of the ceramic or metal foam. This is preferably effected by dip-coating the ceramic or metal foam, i.e. by dipping the ceramic or metal foam into the composition which is capable of forming the zeolite or the zeolite-like material and which is provided typically in a separate beaker or pot. As a consequence, the inventive method leads to ceramic and metal foams with zeolites crystallized on their surfaces, wherein no pores of the foams are blocked.

The composition capable of forming the zeolite or the zeolite-like material contains typically a source of silicon in an alkaline, typically aqueous, medium. Depending on the specific type of zeolite or zeolite-like material desired to crystallize on the surface of the foam the composition optionally contains an aluminium source and a templating agent which is a nitrogen containing compound. Even if the selection of the nature and the exact ratio of ingredients and starting materials of the composition is critical in accordance with the present invention for a successful in-situ synthesis and in-situ crystallization, respectively, of the zeolite or the zeolite-like material on the ceramic or metal foam, such a selection is within the knowledge of the person skilled in the art. Moreover, a wide variety of starting materials for a single component of the composition can be used in order to provide a composition capable of forming the desired zeolite or zeolite-like material, although the other components might then have to be selected accordingly. As an example, the silicon source may be present as a silicate, silica gel or silica hydrosol, silica or silica acid. Very preferred examples of a composition in accordance with the invention are given in the examples.

Typically, the selection of starting materials for the composition is effected in such a manner that the viscosity and consistency of the composition allows to form an adherent and thin coating, i.e. a coating of a thickness of between about 1µm and about 200µm, on the ceramic or metal foam without blocking and plugging the pores. To this purpose, the use of TPAOH as templating agent, if one is considered for the composition, is preferred since it allows to regulate the viscosity and the consistency of the composition in the afore-mentioned sense, e.g. by minor variations of the amount of the solvent used.

In a preferred embodiment of the present invention the inventive method comprises the additional step of contacting the ceramic foam or the metal foam, at least partly, in the course of the heating with vapor of a solvent, preferably with water vapor. This is preferably effected by providing a certain amount of solvent, such as water, at the bottom of the reaction vessel and by providing a support means being manufactured and disposable in the reaction vessel in such a manner that the ceramic or metal foam coated with the zeolite-forming composition thereon can be disposed within the reaction vessel by means of the support means so that the normally liquid phase of the solvent and water, respectively, does not touch the ceramic or metal foam. In the course of the heating within the reaction vessel, which is typically a sealed autoclave or an enclosed bomb, water vapor is formed and, thus, being able to contact the ceramic or metal foam coated with the zeolite-forming composition thereon. The heating is effected at a temperature and for a time sufficient to crystallize the zeolite or the zeolite-like material on the surface of the foam. Typically the heating is effected at a temperature of between about 100°C and about 200°C, preferably between about 120°C and about 180°C, and preferably for a duration of between about 24h and 48h.

The provision of solvent vapor, in particular, of water vapor is very advantageously since water can also play the role of a templating agent in the zeolite synthesis and crystallization, respectively. Several suitable support means such as known autoclave inserts, which are able to provide a contactless disposing of the foam with respect to the water before the heating is effected are commercially available and need no further explanation herein.

Zeolites are typically characterized as crystalline aluminosilicates of group IA and group IIA elements such as sodium, potassium, magnesium and calcium having the empirical formula (I)

M_{2/n}O · (1-y)Al₂O₃ · ySiO₂ · wH₂O (I)

wherein
n is the valence of the cation M,
y the molar fraction of SiO₂ in the zeolite framework, and
w number of water molecules present in the zeolite.

Zeolite structures are based on a three-dimensional framework of AlO₄ and SiO₄ tetrahedra (Si and Al defined as T atoms) which are interlinked through common oxygen atoms forming O-T-O-T-O bonds to give said three dimensional network through which channels run. Each AlO₄ tetrahedron in the framework bears a net negative charge which is compensated by a cation of the aforementioned group IA and group IIA elements. This cation is mobile and can be exchanged by other cations. In the interior of the channels are water molecules and the mentioned mobile cations. Criteria to distinguish zeolites and zeolites structures, respectively, are, inter alia, the number of either T- or O-atoms forming the rings and openings, respectively, controlling diffusion through the channels as well as the molar ratio of SiO₂/Al₂O₃, in short the Si/Al ratio.

The Si/Al ratio of a given zeolite is often variable. For example, zeolite X can synthesized with Si/Al ratios of from about 2 to about 3 and zeolite Y of from about 3 to about 6. In some zeolites, the upper limit of the Si/Al ratio is unbounded. ZSM-5 is one such example wherein the Si/Al ratio is at least 5 and up to infinity. The latter indicates that no aluminium source is added for the provision of the composition capable of forming the zeolite and zeolite-like material. Moreover, although zeolites typically include silicon and aluminium, it is recognized that the silicon and aluminium atoms may be replaced in whole or part with other elements, such as Ge as a known replacement for Si, and B or Ga as a known replacement for Al.

Accordingly, the term "zeolite" as used herein shall encompass not only materials containing silicon and, optionally, aluminium atoms in the afore-mentioned sense and, thus, having the indicated crystalline lattice structure, but also those materials containing suitable replacement atoms for silicon and/or aluminium. Advantageously, the inventive is generally not limited to a specific structure and allows to crystallize zeolites or zeolite-like materials having, e.g. either 8-, 9-, 10-, 12-, 14-, 18- or 20-ring channels onto the surfaces of ceramic or metal foams. Preferred examples are given in the Example Section and include in particular ZSM-5, ZSM-11, ZSM-19, Beta-Zeolite, Zeolite X, Zeolite Y and Zeolite A.

"Zeolite-like materials" as used herein refers to normally solid materials, such as aluminophosphates, silicoaluminophosphates, metalloaluminophosphates and metal oxides containing OH groups, which have solid structures similar to zeolites and, therefore, which contain channels with sizes and shapes similar to channel sizes and shapes in zeolite structures. In particular, "zeolite-like materials" refer to crystalline solids which have zeolite-like structures as indicated by their incorporation in the "Atlas of Zeolite Structure Types" reported by Meier and Olson in "Atlas of Zeolites Structure Types", Zeolites 17(1996), 1-230 (report being incorporated herein for all purposes by way of reference).

Accordingly, the term "crystallizing" as used herein refers to the formation of normally solid structures as defined above. The inventive method leads typically to a chemical bonding between the zeolite crystals and the ceramic or metal foam as is suggested by SEM-pictures. This results in a strong bonding transition from the ceramic or metal foam to the typically interconnected zeolite crystals, which are forming a uniform, continous and regular coating, leading to a high thermal, chemical and mechanical stability of the composite. The inventive method, thus, leads to the formation of a binderless and strongly bonded coating of in-situ synthesized zeolite or zeolite-like material on the surface of a ceramic or metal foam.

In a further preferred embodiment of the present invention, the inventive method comprises the additional step of repeating, at least once, a sequence of the steps a)-d) with said ceramic foam or said metal foam and said layer of zeolite or zeolite-like material crystallized thereon of each previous sequence. A typical example for such a repeating of the steps of the inventive method is, e.g. the need to increase or to control the amount of zeolite or zeolite-like material coated on the foam. Thus, after provision of the composition capable of forming the desired zeolite or zeolite-like material, it is disposed on the already crystallized layer of this ceramic or metal foam. Such a sequence of these steps a),b),c),d) can be repeated several times until the requirements, such as amount or quality are fulfilled.

As already indicated, the preferred composition typically contains a template. Such a template generally contributes to the stability of the formed zeolite or zeolite-like material and promotes the formation of the microporous voids, i.e. the channels and the cavities. Preferably the template is organic in nature and comprising at least one member selected from alkyl- or arylammonium hydroxides, sulfates, bromides, chlorides or the like. The most preferred template is TPAOH, i.e. tetrapropyl ammonium hydroxide.

In a further preferred embodiment of the present invention, the inventive method further comprises the additional step of modifying the zeolite or the zeolite-like material, which is crystallized on the surface of the ceramic foam or the metal foam. Those modifications, which are effected with the zeolitic layer strongly bonded to the foam, allows to modify in a simple way the catalytic properties of the zeolite or the zeolite-like material.

"Modified zeolites" as used herein refers to natural or synthetic zeolites or zeolite-like materials which have been modified by post zeolite synthesis treatments using well known techniques, such as cation or ion exchange, thermal treatment, hydrothermal treatment, impregnation with or without subsequent reduction, treatment with inorganic or organic acids, treatment with inorganic or organic F materials, i.e. inorganic or organic compounds containing fluor or fluoride, as well as with organic silica materials, and, in particular, by an isomorphic substitution of the T atoms, and by other known modifications procedures, such as deposition by plasma chemical vapor processes or other chemical vapor deposition processes. Thus, various T atoms can be introduced into a zeolite framework, such as Ga, Ge, Li, Be, B, Mg, Ti, Mn, Fe, Co, In, As and H. Moreover, aluminium removal with simultaneous substitution by other elements such as Si, Ti, V, Fe, Sn, Ge and P can be effected.

The indicated impregnation can take place by incorporation of at least one substance selected from the group of metal ions and group IA, IIa, IB, IIb, Vb, VIb and VIIIb elements of the periodic table. The latter mentioned elements, i.e. alkali, earth alkali elements as well as the elements of the zinc, the copper, the vanadium and the chromium group and the iron groups of the periodic table can be present either in ionic or atomic form. Thus, such an impregnation can lead to a catalyst having modified catalytic properties based on the combination and/or synergism of the zeolite or zeolite-like catalyst and the catalytic effect of the impregnated metallic or metal component.

However, the ceramic or metal foam coated with zeolite crystals thereon in accordance with the invention can also be used as and function as an ordinary catalyst carrier or a catalyst support, i.e. just carrying the actual catalytic species, such as the above mentioned metallic or metal components or other catalytic species. This is very beneficial since the surface area of the foam is significantly increased by the crystallization of the zeolites thereon. So, the inventive method not only allows to obviate the typical wash-coat procedure in order to increase the surface area, but either to even further increase the surface area of a coated foam and to eliminate the disadvantages connected with the wash coat procedures, as indicated above.

Further preferred embodiments of the present invention are defined in the sub-claims. Preferably, the controlling is effected so that the layer of the zeolite or the zeolite-like material crystallized on the surface of the ceramic foam or the metal foam has a surface area of at least about 30 m²/g up to about 500 m²/g. Moreover, the controlling is preferably effected so that the layer of the zeolite or zeolite-like material on the surface of the ceramic or metal foam has a thickness of between about 1µm and about 200µm, preferably between about 5µm and about 150µm, and more preferably between about 10µm and about 100µm.

In a further preferred embodiment, the ceramic foam comprises aluminium nitride, more preferably consists essentially of aluminium nitride. The high thermal conductivity of the aluminium nitride greatly enhances the heat transfer capability of the corresponding ceramic foam with the zeolite or zeolite-like material coated thereon. Aluminium nitride combines, thus, high thermal conductivity like a metal with electrically insulating properties and is, therefore an interesting carrier for catalyzed reactions that are suffering from hotspot or coldspot appearance. The term "consisting essentially of" as used herein, should indicate that as a single starting material for manufacturing the ceramic foam aluminium nitride is used, wherein all commercially available forms and, in particular, purities of such an aluminium nitride should be encompassed within this term. The preparation of the ceramic foams containing or consisting essentially of aluminium nitride can be effected by known procedures, e.g. as described in the EP 586 102 and in the EP 726 234.

The inventive catalysts, i.e. the zeolite-coated ceramic or metal foams, are applicable for many catalytic reactions, such as carbon dioxide reforming of methane, hydrocarbon cracking, methanol to gasoline processes, Fischer-Tropsch processes or steam reforming of hydrocarbons. Moreover the inventive ceramic or metal foams are preferably used for VOC (volatile organic compounds) and toxic organic materials decomposition. To this purpose, the inventive ceramic or metal foams, in particular ceramic foams with zeolites of high Si/Al ratios, or, in general, high Si contents are used for adsorbing organic materials or organic vapors. Such an adsorption is very efficient and even applicable if low concentrations of VOC's or toxic organic materials need to be adsorbed, e.g. from the air. Advantageously, the foams having the VOC's or toxic organic materials adsorbed thereon can be then decomposed by dielectric barrier discharge reactions, wherein now the inventive foams act as catalyst for destroying, typically by cracking, the organic materials adsorbed thereon. The dielectric barrier discharge reactions, additionally, lead to the regeneration of the inventive foams.

A very preferable use of the inventive foams is, thus, their use as normally solid catalyst or as catalyst support in dielectric barrier discharge reactions. As an example, in the pending European Patent application No. 99810261 filed by the present assignee the synthesis of liquid hydrocarbons is disclosed, wherein a mixture of carbon dioxide and methane is exposed to a dielectric barrier discharge in the presence of a normally solid catalyst such as a zeolite or a zeolite-like material. The use of the inventive zeolite-coated foams increases the specific activity of the catalyst by, inter alia, significantly increasing the surface area as well as by a better distribution of the catalyst on the surface of the foam.

Moreover, the present invention allows to reuse a given zeolite or zeolite-like material catalyst for catalytic dielectric barrier discharges since it is crystallized on the surface of the catalyst support, and thus, can be transferred as a unit to another dielectric barrier discharge reactor. Furthermore, if the catalytic layer needs to be regenerated, and in particular, needs to be purified from undesired reaction residues, the present invention allows to simply do the regeneration or the required purification operation directly with the support, i.e. the ceramic or metal foam. Therefore, there is no need for manipulations, such as removal and re-disposing of the catalyst to an support or the like, in order to effect such a regeneration or purification of the zeolite, the zeolite-like material or the modified zeolite.

### Brief Description of the Drawings

For a better understanding of the nature and scope of the present invention - and not to limit the invention preferred embodiments and details of the present invention are described in more detail below by reference to the drawings, in which:
Fig. 1 is a SEM picture of a ceramic foam used in this invention (cf. Example 2); and
Fig. 2 is a SEM picture of the ceramic foam of Fig. 1 with ZSM-5 in-situ crystallized on its surface by the inventive method (cf. Example 2).

### Detailed Description of the Drawings and Examples

In-situ syntheses of zeolites on the surfaces of ceramic foams are described.

Source materials (all commercially available, e.g. Fluka Chemicals):
Distilled water
Sodium hydroxide (30wt.% in water)
Sodium silicate solution (Na₂O: 8wt.%, SiO₂ wt.28.5%)
Aluminum sulfate hexadecahydrate (Al₂O₁₂S₃.16H₂O)
Tetrapropylammonium bromide (TPABr)
Tetrapropylammonium hydroxide solution(TPAOH)
Sulfuric acid 98%
LS colloidal silica, 30wt.% suspension in water

The ceramic foams are commercially available and obtained from Vesuvius Hi Tech Ceramics. For the examples, ceramic foams containing 92% Al₂O₃ with 45 ppi and a mean pore size of between about 400µm and about 575µm were used.

### Example 1:

An in-situ synthesis of zeolite ZSM-5 on the surface of a ceramic foam is described in this example.

### Batch Composition:

6.0 Na₂O : 1.0 Al₂O₃ : 45.0 SiO₂ : 5.0 TPABr : 1840.0 H₂O (molar ratio)

Calculate the amount of source materials according to the batch composition:
1) Aluminum sulfate hexadecahydrate (Al₂O₁₂S₃.16H₂O) : 3.15g;
2) Sodium silicate solution (Na₂SiO₃, Na₂O: 8wt.%, SiO₂ wt.28.5%): 94.7ml;
3) Distilled water: 235ml;
4) Sulfuric acid 98%: 5.43g;
5) Tetrapropylammonium bromide (TPABr): 13.30g.

Put a 94.7ml Na₂SiO₃ solution and 13.30g TPABr in a 500ml beaker. Mix with 235ml distilled water (First solution). Put 3.15g Aluminum sulfate hexadecahydrate (Al₂O₁₂S₃.16H₂O) and 5.43g sulfuric acid in a separate 500ml beaker. Then, add the first solution to this beaker as well. Mix the resulting composition and slurry, respectively, on a stir plate for 20 minutes. Then dip the ceramic foam into the slurry and transfer them to a stainless steel autoclave and seal it. Heat the autoclave to 373K and hold it there for 24 hours first, and then raise the temperature to 443K for 36hours.

After 36 hours heating, turn off the heat and let it cool to room temperature. Take the reactor apart and analyze the product formed on the surface of the ceramic foam with SEM and XRD. If the X-ray pattern matches the expected one, then wash it several times with a certain amount of water and then dry at 423K overnight. The amount of zeolite ZSM-5 and the thickness of the layer formed on the surface of the ceramic foam can be controlled and modified by repeating the above operation several times (e.g. 2-3 times) according to the requirement.

The so-synthesized zeolite NaZSM-5 is calcined in air by heating at 16K/min to 773K for 4h to remove the organic template.

### Example 2:

An in-situ synthesis of zeolite ZSM-5 on the surface of a ceramic foam is described in this example.

### Batch Composition:

2 Na₂O : (0-0.05) Al₂O₃ : 38.5 SiO₂ : 3.8 TPAOH : 600 H₂O (molar ratio)

Calculate the amount of source materials according to the batch composition:
1) Tetrapropylammonium hydroxide solution (TPAOH) : 38.6ml:
2) LS colloidal silica, 30wt.% suspension in water 64.2ml;
3) Sodium hydroxide solution (30wt.% in water): 8.3ml;
4) Distilled water

Put 64.2 ml LS colloidal silica, 30wt.% suspension in water and 38.6 ml Tetrapropylammonium hydroxide solution (TPAOH), and 8.3ml Sodium hydroxide (30wt.% in water) in a 250ml beaker. Then, mix them on a stir plate ba adding distilled water for 20 minutes.

Put the corresponding calculated amount of aluminum sulfate solution in a separate 250ml beaker. Then, add the first solution to this beaker as well to forming a composition and slurry, respectively. Stir the slurry for 20 minutes. Then dip the ceramic foam into the slurry 3 times and take it out and let it dry in air.

Put 200ml of distilled water into the stainless steel autoclave first, then put the dipped ceramic foam on a supporter and support means, respectively, so that the ceramic foam does not touch the water; then seal the autoclave and put it into an oven. Heat the autoclave to 373K and hold there for 24 hours first, and then raise the temperature to 443K for 48hours.

After 48 hours heating, turn off the heat and let it cool to room temperature. Open the autoclave and analyze the product formed on the surface of the ceramic foam with SEM, BET and XRD. If the X-ray pattern matches the expected one, then wash it several times with a certain amount of water each and then dry at 423K overnight.

The as in-situ synthesized zeolite NaZSM-5 is calcined in air by heating at 16K/min to 773K for 4h to remove the organic template.

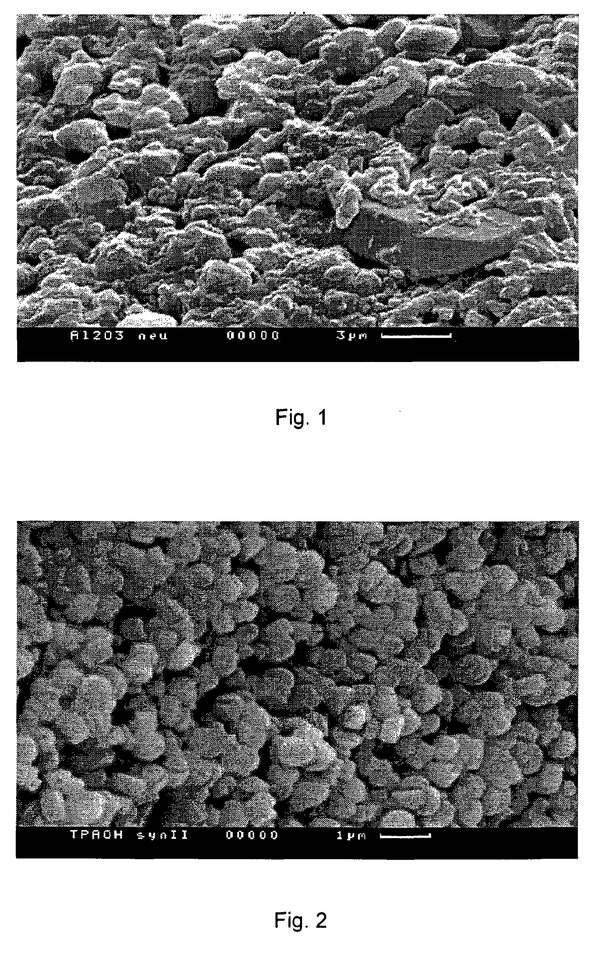

Fig. 1 shows a SEM (Scanning Electron Microscopy) picture of the ceramic foam used in this example, i.e. a ceramic foam of Vesuvius Hi-Tec Ceramics containing 92% Al₂O₃ with 45 ppi and a mean pore size of between about 400µm and about 575µm. The SEM picture corresponds to the foam as delivered.

Fig. 2 shows a corresponding SEM picture after the in-situ crystallization of ZSM-5 on the surface of the ceramic foam being effected according to example 2. The picture clearly shows the regularly shaped ZSM-5 crystals forming a homogeneous, complete and uniform layer of zeolite crystals on the surface of the foam.

### BET-Measurements

Table 1 lists BET measurements determining the specific surface area of the ceramic foams used in the afore-mentioned Example 2. As indicated, ceramic foams of Vesuvius Hi-Tec Ceramics containing 92% Al₂O₃ with 45 ppi and a mean pore size of between about 400µm and about 575µm were used.

The surface area was determined using a Micromeritics ASAP 2010 surface analyzer at 77K.

**Table 1.**

| Ceramic foam measured | Surface Area (N₂ ads.) [m²/g] |
|---|---|
| Foam without washcoat (as delivered) | 0.03 |
| Foam with commercial Al₂O₃ washcoat | 10.9 |
| Foam of Example 2 (coated with ZSM-5; using TPAOH as template during in-situ crystallization) | 39.4 |

### Example 3:

An in-situ synthesis of zeolite beta on the surface of a ceramic foam is described in this example.

Source materials and ceramic foams are commercially available and have been identified above (cf. prior to Example 1).

### Batch Composition:

3 Na₂O : (0.25) Al₂O₃ : 25.0 SiO₂ : 7.0 TEAOH : 450 H₂O (molar ratio)

Calculate the amount of source materials according to the batch composition:
1) Tetraethylammonium hydroxide solution (TEAOH) : 25.75ml:
2) LS colloidal silica, 30wt.% suspension in water 41.67ml;
3) Sodium hydroxide solution (30wt.% in water): 14.4ml;

Put 41.67 ml LS colloidal silica, 30wt.% suspension in water and 25.75 ml Tetraethylammonium hydroxide solution (TEAOH), and 7.2 ml Sodium hydroxide (30wt.% in water) in a 250ml beaker. Then, mix them on a stir plate by adding distilled water for 20 minutes.

Put the corresponding calculated amount of aluminum sulfate 1.54g(Al2(SO4)3.16H2O) in a separate 250ml beaker, and add 7.2ml sodium hydroxide (30% in water). Then, add the first solution to this beaker as well to forming a composition and clear slurry, respectively. Stir the slurry for 20 minutes. Then dip the ceramic foam into the slurry 3 times, take it out, and let it dry in air.

Put 200ml of distilled water into the stainless steel autoclave (2 l volume) first, then put the dipped ceramic foam on a supporter and support means, respectively, so that the ceramic foam does not touch the water; then seal the autoclave and put it into an oven. Heat the autoclave to 373K, hold it there for 24 hours first, and then raise the temperature to 423K for 48hours.

After 48 hours heating, turn off the heat and let it cool to room temperature. Open the autoclave and analyze the product formed on the surface of the ceramic foam with SEM, BET and XRD. If the X-ray pattern matches the expected one, then wash it several times with a certain amount of water each and then dry at 423K overnight. We can control the amount of zeolite Beta formed on the surface of ceramic foams by repeating above operations.

The as in-situ synthesized zeolite beta is calcined in air by heating at 16K/min to 773K for 4h to remove the organic template.

In the following an ion-exchange procedure as well as a metal oxide impregnation is described exemplarily.

### Ion exchange

The calcined sample, i.e. the ceramic foam coated with the zeolite thereon, is exchanged with 50ml, 0.1M Ni(NO₃)₂ solution at 343K for 1h. The operation is repeated 4 times, and then the solid is washed with distilled water. The product is dried overnight at 363K in order to obtain Ni-exchanged zeolite bonded on the ceramic foam. The degree of Ni⁺ exchange could be determined by ICP or AAS (atomic-adsorption-spectrum technology). For the reaction, the nickel is reduced in a gas flow containing 10% hydrogen in nitrogen.

### Metal oxide impregnation

The calcined sample is dipped into a solution of 2g RhCl₃·3H₂O in 10 ml of ethanol p.a.. The sample is taken out and dried at 120°C for 2 hours. Afterwards, the sample is calcined in air with a temperature ramp of 6K/min and an end temperature of 550°C. The rhodium content is examined by AAS. For the reaction, the rhodium is reduced in a gas flow containing 10% hydrogen in nitrogen.

## Claims

1. A method of crystallizing a layer of zeolite or zeolite-like material on the surface of a ceramic foam or a metal foam; said method comprising the steps of:
a) providing a composition capable of forming said zeolite or said zeolite-like material;
b) coating at least a part of said composition on said surface of said ceramic foam or said metal foam;
c) heating said ceramic foam or said metal foam with said composition coated thereon within a reaction vessel;
d) controlling said coating and said heating to crystallize said layer of zeolite or zeolite-like material on said surface of said ceramic foam or said metal foam.

2. The method of claim 1, wherein said coating of said composition on said surface of said ceramic foam or said metal foam is effected by dip-coating.

3. The method of claim 1 or 2 comprising the additional step of contacting said ceramic foam or said metal foam, at least partly, in the course of said heating with vapor of a solvent, preferably with water vapor.

4. The method of any of claims 1 to 3 comprising the additional step of repeating, at least once, a sequence of said steps a)-d) with said ceramic foam or said metal foam and said layer of zeolite or zeolite-like material crystallized thereon of each previous sequence.

5. The method of any of claims 1 to 4 further comprising the additional step of modifying said zeolite or said zeolite-like material being crystallized on said surface of said ceramic foam or said metal foam.

6. The method of any of claims 1 to 5, wherein said ceramic foam comprises aluminium nitride, preferably consists essentially of aluminium nitride.

7. A ceramic or a metal foam comprising a layer of zeolite, zeolite-like material or modified zeolite, wherein said zeolite, zeolite-like material or modified zeolite is crystallized on the surface of said ceramic foam, and wherein said ceramic foam or said metal foam is obtainable by a method of any of claims 1 to 7.

8. Use of a ceramic or a metal foam comprising a layer of zeolite, zeolite-like material or modified zeolite as normally solid catalyst or as adsorbent, wherein said zeolite, zeolite-like material or modified zeolite is crystallized on the surface of said ceramic foam.

9. Use of a ceramic or a metal foam comprising a layer of zeolite, zeolite-like material or modified zeolite as a normally solid catalyst or a catalyst support in dielectric barrier discharge reactions, wherein said zeolite, zeolite-like material or modified zeolite is crystallized on the surface of said ceramic foam.

10. A dielectric barrier discharge reactor for catalytic conversion of a fluid or normally solid material comprising
a first electrode means,
a second electrode means,
a normally solid dielectric material positioned between said first and said second electrode means,
a ceramic foam positioned between said first and said second electrode means, and
a normally solid catalyst being a member selected from the group consisting of zeolites, modified zeolites and zeolite-like materials,
wherein said normally solid catalyst is crystallized on the surface of said ceramic foam.
